# EUROPÄISCHE PATENTSCHRIFT

(11) **EP 3 416 812 B1**
(45) Veröffentlichungstag und Bekanntmachung des Hinweises auf die Patenterteilung: **02.12.2026**
(21) Anmeldenummer: 17712990.5
(22) Anmeldetag: 22.03.2017
(51) Int. Cl.: B33Y 10/00, B33Y 80/00, B29C 70/88, B22F 12/45, B22F 3/105, B22F 1/102, B29C 64/153, B22F 10/28, B22F 10/364, B22F 10/50, B22F 12/41, B22F 12/44, B22F 12/49

(54) **VERFAHREN UND VORRICHTUNG ZUM HERSTELLEN EINES DREIDIMENSIONALEN OBJEKTS**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 23.03.2016 DE 102016204905
(43) Veröffentlichungstag der Anmeldung: 26.12.2018
(73) Patentinhaber: EOS GmbH Electro Optical Systems, 82152 Krailling (DE)
(72) Erfinder: ZAEPERNICK, Nikolai, 82547 Eurasburg (DE); KELLER, Peter, 82152 Krailling (DE); PFEFFERKORN, Florian, 80689 München (DE); DANZIG, André, 88161 Lindenberg (DE); PFISTER, Andreas, 81475 München (DE)
(74) Vertreter: Prüfer & Partner mbB Patentanwälte · Rechtsanwälte
(86) Internationale Anmeldenummer: PCT/EP2017/056892
(87) Internationale Veröffentlichungsnummer: WO 2017/162781

(56) Entgegenhaltungen:
- EP-A1- 2 565 022
- EP-A1- 2 565 294
- EP-A1- 2 581 154
- WO-A1-2005/105412
- US-A1- 2015 188 024

## Beschreibung

Die vorliegende Erfindung bezieht sich auf ein Verfahren und eine Vorrichtung zum Herstellen eines dreidimensionalen Objekts durch schichtweises und selektives Verfestigen eines Aufbaumaterials.

Verfahren und Vorrichtungen dieser Art werden beispielsweise beim Rapid Prototyping, Rapid Tooling und Additive Manufacturing verwendet. Ein Beispiel eines solchen Verfahrens ist als "selektives Lasersintern" oder "selektives Laserschmelzen" bekannt. Dabei wird wiederholt eine dünne Schicht eines pulverförmigen Aufbaumaterials innerhalb eines Baufelds aufgebracht und das Aufbaumaterial in jeder Schicht durch selektives Bestrahlen mit einem Laserstrahl selektiv verfestigt, das heißt Aufbaumaterial wird an diesen Stellen an- oder aufgeschmolzen und erstarrt unter Bildung eines Materialverbunds.

Die Druckschrift DE 195 14 740 C1 beschreibt ein Verfahren zum Herstellen eines dreidimensionalen Objekts mittels selektiven Lasersinterns oder Laserschmelzens sowie eine Vorrichtung zum Ausführen dieses Verfahrens.

In vielen Fällen ist es sehr aufwendig bzw. unmöglich, ausschließlich durch schichtweises Aufbringen und selektives Verfestigen eines Aufbaumaterials ein dreidimensionales Objekt mit den gewünschten Eigenschaften herzustellen.

In der Druckschrift DE 10 2009 051 551 A1 ist ein generatives Fertigungsverfahren zum schichtweisen Aufbau eines Bauteils offenbart, bei dem zur Steigerung der Festigkeit und Verringerung der Mikroporosität eine laser- oder plasmainduzierte Druckbeaufschlagung von Bauteilschichten erfolgt.

In der Druckschrift WO 2013/127655 A1 ist ein Verfahren zum Herstellen eines dreidimensionalen Objekts durch schichtweises Verfestigen eines Pulvers offenbart, bei dem zumindest ein nicht näher definierter Teilbereich einer Schicht mittels eines Elektronenstrahls erhitzt wird, um die mechanischen Eigenschaften der Schicht zu verbessern.

Die Druckschrift DE 10 2012 014 841 A1 zeigt eine Vorrichtung zur Herstellung dreidimensionaler Objekte durch schichtweises Verfestigen eines Aufbaumaterials mittels elektromagnetischer Strahlung, wobei die Vorrichtung eine Schleifvorrichtung zum Glätten bereits verfestigter Bereiche einer Schicht aufweist.

Die Druckschrift DE 100 28 063 A1 offenbart ein Verfahren zur Herstellung eines Werkstücks durch schichtweises Verfestigen pulverförmigen Materials mittels elektromagnetischer Strahlung, wobei der seitliche Rand einer verfestigten Materialschicht entsprechend der Endkontur des Werkstücks einer Wälzfräsbearbeitung unterzogen wird.

Die Druckschrift EP 2 581 154 A1 beschreibt ein generatives Schichtbauverfahren, bei dem ein dreidimensionales Objekt aus einem pulverförmigen Aufbaumaterial hergestellt wird und während der Herstellung ein Heizelement in dem Objekt untergebracht wird.

Die Druckschrift EP 2 565 022 A1 beschreibt ein generatives Schichtbauverfahren zur Herstellung eines Objekts aus einem Aufbaumaterial, wobei das Aufbaumaterial ein Matrixmaterial mit darin eingebetteten magnetischen Partikeln umfasst. Die magnetischen Partikel werden in einem Magnetfeld orientiert bzw. positioniert und anschließend wird das Aufbaumaterial selektiv verfestigt.

Die Druckschrift WO 2005/105412 A1 beschreibt ein generatives Schichtbauverfahren zur Herstellung eines dreidimensionalen Objekts aus einem Pulver, bei dem ein Absorber selektiv auf die zu verfestigenden Bereiche einer Pulverschicht aufgetragen wird und die entsprechenden Bereiche anschließend durch Einbringung von elektromagnetischer Energie aufgeschmolzen werden, sodass sie nach dem Abkühlen als Formteil vorliegen.

Aus der EP 2 565 294 A1 ist ein additives Herstellungsverfahren bekannt, bei dem Materialeigenschaften eines Bauteils gezielt beeinflusst werden können.

Eine Aufgabe der vorliegenden Erfindung besteht darin, ein verbessertes Verfahren bzw. eine verbesserte Vorrichtung zum Herstellen eines dreidimensionalen Objekts durch schichtweises Aufbringen und selektives Verfestigen eines Aufbaumaterials bereitzustellen. Dabei ist es insbesondere bevorzugt, das Bauteil schnell und/oder effektiv mit speziellen Bauteileigenschaften ausstatten zu können.

Die Aufgabe wird gelöst durch ein Verfahren gemäß Anspruch 1, ein Computerprogramm gemäß Anspruch 15, eine Steuereinrichtung gemäß Anspruch 13 und eine Vorrichtung gemäß Anspruch 14.

Die in den Unteransprüchen zu einer Anspruchskategorie genannten Merkmale und die auf den zu einer Anspruchskategorie gehörenden Gegenstand bezogenen, weiter unten in der Beschreibung angeführten Merkmale können auch als Weiterbildung des Gegenstands jeder anderen Anspruchskategorie verstanden werden.

Beim erfindungsgemäßen Verfahren gemäß Anspruch 1 handelt es sich um ein Verfahren zum Herstellen eines dreidimensionalen Objekts durch schichtweises Aufbringen und selektives Verfestigen von Aufbaumaterial. Das Verfahren enthält den Schritt des Aufbringens einer Schicht des Aufbaumaterials innerhalb eines Baufelds. Das Verfahren enthält den Schritt des selektiven Verfestigens der aufgebrachten Schicht durch Verfestigen eines Bereichs der aufgebrachten Schicht, der dem Querschnitt des Objekts in der Schicht entspricht, zum Erzeugen eines verfestigten Bereichs in der Schicht. Die Schritte des Aufbringens und des selektiven Verfestigens werden wiederholt, bis das dreidimensionale Objekt fertiggestellt ist. Wenigstens einmal während des Herstellens des dreidimensionalen Objekts wird ein Teilbereich, der lediglich ein vorausbestimmter Teil des verfestigten Bereichs ist, nachbehandelt, wobei durch das Nachbehandeln in dem Teilbereich eine Materialeigenschaft geändert wird. Dadurch kann beispielsweise ein dreidimensionales Objekt hergestellt werden, welches zumindest in einer Zone eine im Vergleich zu einer anderen Zone veränderte Materialeigenschaft aufweist.

Vorzugsweise wird zum Verfestigen des Bereichs ein erster Befehlsdatensatz und zum Nachbehandeln des Teilbereichs ein zweiter Befehlsdatensatz ausgeführt, wobei dem zweiten Befehlsdatensatz Koordinatenangaben zugrunde liegen, die auch dem ersten Befehlsdatensatz zugrunde liegen. Dadurch wird beispielsweise sichergestellt, dass die vorausbestimmte Lage des nachbehandelten Teilbereichs in dem verfestigten Bereich genau eingehalten werden kann.

Vorzugsweise ist die Materialeigenschaft eine elektrische Materialeigenschaft, bei der es sich insbesondere um die elektrische Leitfähigkeit handelt, und/oder eine optische Materialeigenschaft, bei der es sich insbesondere um die Farbe und/oder das Absorptionsvermögen und/oder die optische Durchlässigkeit handelt, und/oder eine magnetische Materialeigenschaft und/oder eine mechanische Materialeigenschaft, bei der es sich insbesondere um die Materialhärte handelt, und/oder die räumliche Ausrichtung von Partikeln. Dadurch ist es beispielsweise möglich, ein dreidimensionales Objekt herzustellen, welches in einer Zone eine im Vergleich zu einer anderen Zone höhere elektrische Leitfähigkeit und/oder ein höheres magnetisches Moment und/oder eine höhere optische Durchlässigkeit aufweist. Eine mögliche Vorgehensweise im Rahmen dieser bevorzugten Ausführungsform der Erfindung wird untenstehend anhand eines ausgewählten Beispiels näher erläutert:
Bei dem Schritt des selektiven Verfestigens wird nur relativ wenig Energie eingebracht, so dass das pulverförmige Aufbaumaterial nur leicht verschmolzen wird. Hieraus resultiert eine relativ hohe Porosität und somit nur geringe Steifigkeit bzw. Festigkeit des dreidimensionalen Objekts an den selektiv verfestigten Stellen. Beim Nachbehandeln im Rahmen der Erfindung wird dann nochmals Energie eingebracht, so dass das Pulver nun besser aufschmilzt und das Bauteil an ausgewählten nachbehandelten Stellen eine höhere Steifigkeit bzw. Festigkeit erzielt. Ein bevorzugter Anwendungsfall für das Vorgehen gemäß diesem Beispiel ist die Anwendung bei flexiblen Kunststoffen, wie z.B. thermoplastischen Elastomeren.

Alternativ oder ergänzend wird durch das Nachbehandeln in dem Teilbereich verfestigtes Material abgetragen. Dadurch kann beispielsweise ein dreidimensionales Objekt, das in seinem Inneren kleine Hohlräume mit vorausbestimmter Größe, Form und Lage aufweist, erzeugt werden.

Vorzugsweise wird dabei ein pulverförmiges Aufbaumaterial verwendet, das eine erste Pulverkomponente und eine zweite Pulverkomponente umfasst, welche beiden Pulverkomponenten sich in ihren Materialeigenschaften unterscheiden, wobei die zweite Pulverkomponente im Wesentlichen signifikant feinkörnigere Pulverkörner umfasst als die erste Pulverkomponente. Das Verfahren enthält den Schritt des Abtragens des verfestigten Materials in dem Teilbereich dergestalt, dass im Teilbereich Löcher und/oder Rillen generiert werden, die schmäler als eine Körnung der ersten Pulverkomponente sind. Das Verfahren enthält ferner den Schritt des Aufbringens des Aufbaumaterials mindestens im Teilbereich, sodass im Wesentlichen ausschließlich die zweite Pulverkomponente in die Löcher und/oder Rillen eindringen kann. Dadurch ist es beispielsweise möglich, ein dreidimensionales Objekt herzustellen, das aus einem ersten Material (hergestellt durch Verfestigen beider Pulverkomponenten) besteht, in das an vorausbestimmten Stellen im Inneren Zonen aus einem anderen Material (hergestellt aus der zweiten Pulverkomponente) eingebettet sind.

Vorzugsweise wird zum Nachbehandeln des Teilbereichs eine Strahlung eingesetzt, die sich von einer zum Verfestigen des Bereichs eingesetzten Strahlung unterscheidet, insbesondere hinsichtlich ihrer Bestandteile und/oder ihrer Wellenlänge und/oder ihrer Intensität und/oder ihrer Leistungsdichte. Dadurch ist es beispielsweise möglich, beim Nachbehandeln physikalische und/oder chemische Umwandlungen vorzunehmen, die von einer zum Verfestigen des Bereichs eingesetzten Strahlung nicht hervorgerufen werden können.

Vorzugsweise wird durch das Nachbehandeln in dem Teilbereich ein elektrischer Leiter, insbesondere ein metallischer Leiter, erzeugt. Dadurch können beispielsweise in einem dreidimensionalen Objekt, welches ansonsten aus einem elektrischen Isolator besteht, elektrisch leitfähige Durchführungen erzeugt werden.

Vorzugsweise wird dabei als Aufbaumaterial ein Material mit zumindest einer elektrischen Leiterkomponente und zumindest einer elektrischen Isolatorkomponente verwendet. Die elektrische Isolatorkomponente wird mindestens in dem Teilbereich mindestens partiell von der elektrischen Leiterkomponente separiert. Beim Nachbehandeln wird die elektrische Leiterkomponente in dem Teilbereich unter Bildung des elektrischen Leiters verbunden, insbesondere an- und/oder aufgeschmolzen. So ist es beispielsweise möglich, komplexe dreidimensionale Leiterstrukturen auf einfache Weise zu erzeugen.

Bevorzugt ist in diesem Zusammenhang, dass sich der Schmelzpunkt oder Schmelzbereich der elektrischen Leiterkomponente unterhalb der Zersetzungstemperatur der Isolatorkomponente befindet und vorzugsweise nur unwesentlich (d.h. insbesondere um höchstens 10%, bevorzugt 5% Temperaturunterschied in K und/oder um höchstens 50 K, bevorzugt 25 K erhöht) oberhalb des Schmelzbereichs oder Schmelzpunkts der Isolatorkomponente. Die Zersetzungstemperatur kann beispielsweise mittels einer gemäß ISO 11358 (ISO 11358-1:2014, ISO 11358-2:2014, ISO 11358-3:2013) durchgeführten thermogravimetrischen Methode bestimmt werden.

Vorzugsweise wird als Aufbaumaterial ein Pulver verwendet, das aus einem elektrischen Leiter bestehende Partikel enthält, die von einem elektrischen Isolator ummantelt sind. Dadurch ist es beispielsweise möglich, in einem Schritt eine Schicht eines Aufbaumaterials aufzutragen, das sowohl aus einer elektrisch isolierenden als auch aus einer elektrisch leitfähigen Komponente besteht, das Aufbaumaterial so zu verfestigen, dass ein elektrisch isolierender Materialverbund erzeugt wird, in den elektrisch leitfähige Partikel eingebettet sind, und diese elektrisch leitfähigen Partikel durch Nachbehandeln mittels Bestrahlung mit einer elektromagnetischen Strahlung in einem Teilbereich der verfestigten Schicht so miteinander in Kontakt zu bringen, dass ein elektrisch leitfähiger Teilbereich entsteht.

In diesem Zusammenhang ist es bevorzugt, dass der elektrische Isolator durch die Nachbehandlung der Schicht entfernt wird, vorzugsweise im Wesentlichen rückstandsfrei entfernt wird. Weiterhin ist es bevorzugt, dass die aus dem elektrischen Leiter bestehenden Partikel durch die Nachbehandlung gleichzeitig mit dem Weichen des elektrischen Isolators aufgeschmolzen werden. Vorzugsweise wird der Teilbereich zumindest während des Nachbehandelns der Einwirkung eines magnetischen und/oder elektrischen und/oder elektromagnetischen Felds ausgesetzt. Dadurch ist es beispielsweise möglich, im Aufbaumaterial eingebettete Partikel oder Fasern im angelegten Feld auszurichten, sodass sie im hergestellten dreidimensionalen Objekt eine bevorzugte Orientierung einnehmen.

Vorzugsweise wird zum Nachbehandeln mindestens in dem Teilbereich ein vom Aufbaumaterial verschiedener Stoff aufgebracht und bevorzugt nach dem Aufbringen aktiviert. Dadurch kann beispielsweise eine Substanz aufgebracht werden, welche im Teilbereich mit dem zuvor verfestigten Aufbaumaterial eine chemische Reaktion eingeht, durch die eine Materialeigenschaft im Teilbereich verändert wird.

Das erfindungsgemäße Computerprogramm gemäß Anspruch 15 ist in eine programmierbare Steuereinrichtung ladbar und enthält einen Programmcode, um alle Schritte eines erfindungsgemäßen Verfahrens auszuführen, wenn das Computerprogramm auf einer Steuereinrichtung ausgeführt wird. Dadurch ist es beispielsweise möglich, das erfindungsgemäße Verfahren programmgestützt durchzuführen.

Bei der erfindungsgemäßen Steuereinrichtung gemäß Anspruch 13 handelt es sich um eine Steuereinrichtung für eine Vorrichtung zum Herstellen eines dreidimensionalen Objekts durch schichtweises Aufbringen und selektives Verfestigen von Aufbaumaterial. Die Steuereinrichtung ist ausgebildet, die Vorrichtung so zu steuern, dass sie eine Schicht des Aufbaumaterials innerhalb eines Baufelds aufbringt, die aufgebrachte Schicht durch Verfestigen eines Bereichs der aufgebrachten Schicht, der dem Querschnitt des Objekts in der Schicht entspricht, zum Erzeugen eines verfestigten Bereichs in der Schicht selektiv verfestigt, das Aufbringen und das selektive Verfestigen wiederholt, bis das dreidimensionale Objekt fertiggestellt ist, und wenigstens einmal während des Herstellens eines dreidimensionalen Objekts einen Teilbereich, der lediglich ein vorausbestimmter Teil des verfestigten Bereichs ist, nachbehandelt. Der Teilbereich liegt vorzugsweise im Wesentlichen im Inneren des verfestigt Bereichs und/oder es wird dabei durch das Nachbehandeln in dem Teilbereich eine Materialeigenschaft geändert. Dadurch wird eine Steuereinrichtung bereitgestellt, die in der Lage ist, eine Vorrichtung zum Herstellen eines dreidimensionalen Objekts so zu steuern, dass sie das erfindungsgemäße Verfahren automatisch durchführt.

Bei der erfindungsgemäßen Vorrichtung gemäß Anspruch 14 handelt es sich um eine Vorrichtung zum Herstellen eines dreidimensionalen Objekts durch schichtweises Aufbringen und selektives Verfestigen von Aufbaumaterial. Die Vorrichtung ist so ausgebildet, insbesondere mittels der erfindungsgemäßen Steuereinrichtung so gesteuert zu werden, dass sie eine Schicht des Aufbaumaterials innerhalb eines Baufelds aufbringt, die aufgebrachte Schicht durch Verfestigen eines Bereichs der aufgebrachten Schicht, der dem Querschnitt des Objekts in der Schicht entspricht, zum Erzeugen eines verfestigten Bereichs in der Schicht selektiv verfestigt, das Aufbringen und das selektive Verfestigen wiederholt, bis das dreidimensionale Objekt fertiggestellt ist, und wenigstens einmal während des Herstellens eines dreidimensionalen Objekts einen Teilbereich, der lediglich ein vorausbestimmter Teil des verfestigten Bereichs ist, nachbehandelt, wobei vorzugsweise der Teilbereich im Wesentlichen im Inneren des verfestigten Bereichs liegt und/oder wobei durch das Nachbehandeln in dem Teilbereich eine Materialeigenschaft geändert wird. Dadurch wird eine Vorrichtung bereitgestellt, mit der das erfindungsgemäße Verfahren ausgeführt werden kann.

Weitere Merkmale und Zweckmäßigkeiten der Erfindung ergeben sich aus der Beschreibung von Ausführungsbeispielen für die erfindungsgemäße Vorrichtung unter Bezugnahme auf die beigefügten Zeichnungen.
- Fig. 1: ist eine schematische und im vertikalen Schnitt dargestellte Ansicht einer Vorrichtung zum schichtweisen Herstellen eines dreidimensionalen Objekts gemäß einem Ausführungsbeispiel der vorliegenden Erfindung.
- Fig. 2: ist eine schematische und im vertikalen Schnitt dargestellte Ansicht einer Vorrichtung zum schichtweisen Herstellen eines dreidimensionalen Objekts gemäß einem anderen Ausführungsbeispiel der vorliegenden Erfindung.
- Fig. 3: ist ein Flussdiagramm eines Verfahrens gemäß einem Ausführungsbeispiel der Erfindung.

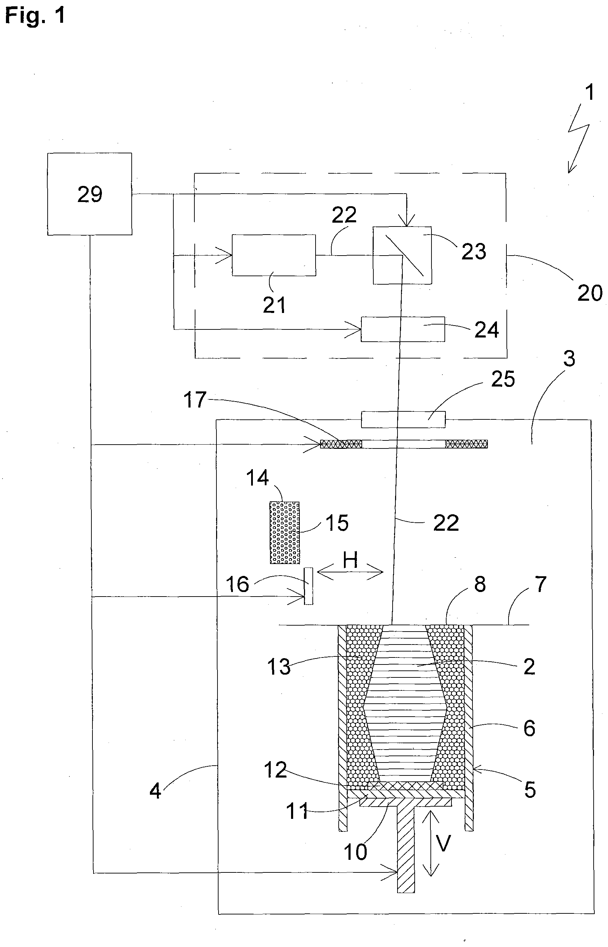

Die in Fig. 1 dargestellte Vorrichtung ist eine Lasersinteroder Laserschmelzvorrichtung 1 zum Herstellen eines Objekts 2. Die Vorrichtung 1 enthält eine Prozesskammer 3 mit einer Kammerwandung 4. In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird. In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selbst aufgebaut werden, die dann als Bauunterlage dient. In Fig. 1 ist das aufzubauende Objekt in einem Zwischenzustand dargestellt. Es besteht aus mehreren verfestigten Schichten und wird von unverfestigt gebliebenem Aufbaumaterial 13 umgeben.

Die Vorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen von Schichten des Aufbaumaterials 15 innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Vorrichtung 1 enthält ferner eine Bestrahlungseinrichtung 20 mit einem Laser 21, der einen Laserstrahl 22 erzeugt, der über eine Umlenkeinrichtung 23 umgelenkt und durch eine Fokussiereinrichtung 24 über ein an der Oberseite der Prozesskammer 3 in der Kammerwandung 4 angebrachtes Einkoppelfenster 25 auf die Arbeitsebene 7 fokussiert wird.

Ferner enthält die Vorrichtung 1 eine Steuereinrichtung 29, über die die einzelnen Bestandteile der Vorrichtung 1 in koordinierter Weise zum Durchführen eines Verfahrens zum Herstellen eines dreidimensionalen Objekts gesteuert werden. Die Steuereinrichtung 29 kann eine CPU enthalten, deren Betrieb durch ein Computerprogramm (Software) gesteuert wird. Das Computerprogramm kann getrennt von der Vorrichtung 1 auf einem Speichermedium gespeichert sein, von dem aus es in die Vorrichtung 1, insbesondere in die Steuereinrichtung 29 geladen werden kann.

Zum Steuern der Vorrichtung 1 führt die Steuereinrichtung 29 Befehlsdatensätze aus. Einem ersten Befehlsdatensatz liegen dabei für eine bestimmte Schicht des dreidimensionalen Objekts 2 die Koordinaten (X, Y) der Stellen, die dem zu verfestigenden Bereich in dieser Schicht und damit dem Querschnitt des dreidimensionalen Objekts 2 entsprechen, zugrunde. Wenn der erste Befelsdatensatz für eine bestimmte Schicht ausgeführt wird, wird der Bereich verfestigt. Einem zweiten Befehsldatensatz liegen für eine bestimmte Schicht des dreidimensionalen Objekts 2 die Koordinaten (X, Y) der Stellen, die dem nachzubehandelnden Teilbereich des verfestigten Bereichs in dieser Schicht entsprechen, zugrunde. Da der nachzubehandelnde Teilbereich ein Teilbereich des verfestigten Bereichs ist, ist die Menge der dem zweiten Befehlsdatensatz zugrunde liegenden Koordinaten eine Teilmenge der Menge der dem ersten Befehlsdatensatz zugrunde liegenden Koordinaten. Die den Befehlsdatensätzen zugrunde liegenden Koordinaten werden in der Praxis typischerweise von einem Computerprogramm aus einem Computermodell (zum Beispiel einem CAD-Modell) des herzustellenden Objekts berechnet.

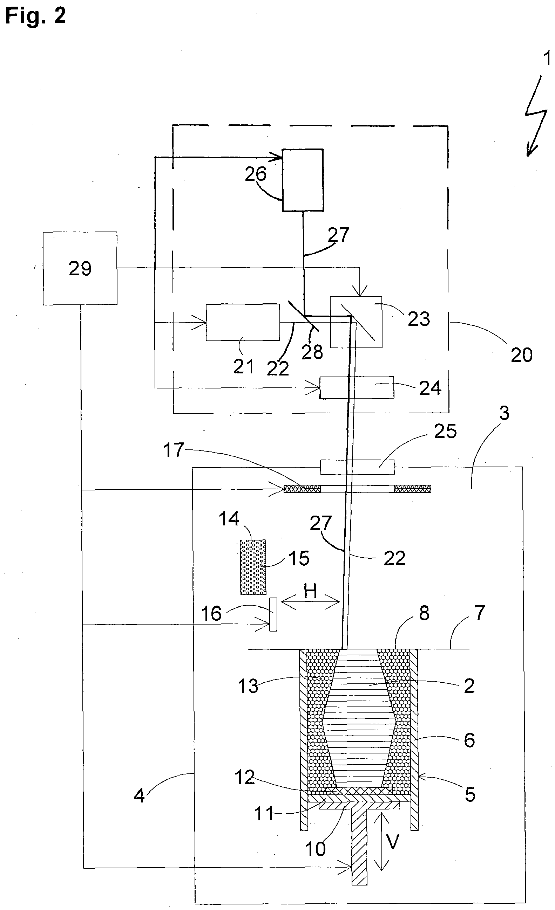

In der Vorrichtung 1 gemäß dem in Fig. 2 dargestellten Ausführungsbeispiel ist in der Bestrahlungseinrichtung 20 neben dem Laser 21 eine weitere Strahlungsquelle 26, welche einen Strahl 27 ausstrahlt, vorgesehen. Der Strahl 27 wird von einem Umlenker 28 auf die Ablenkeinrichtung 23 gelenkt. Von der Ablenkeinrichtung 23 wird der Strahl 27 durch die Fokussiereinrichtung 24 über das Einkoppelfenster 25 auf die Stellen des verfestigten Bereichs, die nachbehandelt werden sollen, gelenkt. Es ist im Rahmen der Erfindung auch möglich, dass für den Strahl 27 und für den Strahl 22 jeweils eine eigene Ablenkeinrichtung und/oder eine eigene Fokussiereinrichtung und/oder ein eigenes Einkoppelfenster vorgesehen sind. In Fig. 2 sind der Übersichtlichkeit halber beide Strahlen 22 und 27 eingezeichnet, obwohl diese bevorzugt nicht gleichzeitig auf das Baufeld 8 in der Arbeitsebene 7 fokussiert werden. Bei dem Strahl 27 kann es sich bevorzugt um einen Strahl elektromagnetischer Strahlung, insbesondere um einen Laserstrahl, oder um einen Teilchenstrahl, insbesondere einen Elektronenstrahl, handeln.

Im Betrieb wird zum Aufbringen einer Pulverschicht der Träger 10 um eine Höhe abgesenkt, die bevorzugt der gewünschten Dicke der Schicht des Aufbaumaterials 15 entspricht. Der Beschichter 16 bewegt sich zunächst zu dem Vorratsbehälter 14 und nimmt aus ihm eine zum Aufbringen einer Schicht ausreichende Menge Aufbaumaterial 15 auf. Dann bewegt er sich über das Baufeld 8 und bringt eine dünne Schicht des pulverförmigen Aufbaumaterials 15 auf die Bauunterlage 10, 11, 12 oder eine bereits vorher vorhandene Pulverschicht auf. Das Aufbringen erfolgt zumindest über den gesamten Querschnitt des herzustellenden Objekts 2, vorzugsweise über das gesamte Baufeld 8. Optional wird das pulverförmige Aufbaumaterial 15 mittels der Strahlungsheizung 17 auf eine Arbeitstemperatur aufgeheizt. Anschließend wird der Querschnitt des herzustellenden Objekts 2 von dem Laserstrahl 22 abgetastet, sodass dieser Bereich der aufgebrachten Schicht verfestigt wird. Die Schritte werden solange wiederholt, bis das Objekt 2 fertiggestellt ist und aus dem Behälter 5 entnommen werden kann.

Erfindungsgemäß wird wenigstens einmal (d. h. in mindestens einer Schicht des Aufbaumaterials 15) während des Herstellens eines dreidimensionalen Objekts 2 ein Teilbereich des verfestigten Bereichs nachbehandelt.

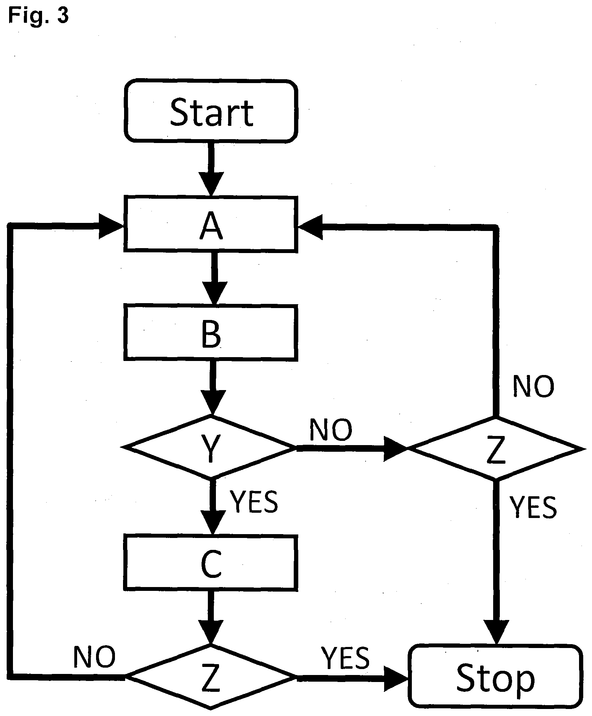

In Fig. 3 ist das Verfahren gemäß einem Ausführungsbeispiel der Erfindung in Form eines Flussdiagramms dargestellt. Die Operation A stellt den Schritt des Aufbringens einer Schicht des Aufbaumaterials 15 innerhalb eines Baufelds 8 dar. Die Operation B stellt den Schritt des selektiven Verfestigens der aufgebrachten Schicht dar. Das selektive Verfestigen erfolgt dabei durch Verfestigen eines Bereichs der aufgebrachten Schicht, der dem Querschnitt des Objekts in dieser Schicht entspricht. Die Operation C stellt das Nachbehandeln eines Teilbereichs des verfestigten Bereichs in der Schicht dar. Die Verzweigung Y stellt die Entscheidung, ob der verfestigte (Operation B) Bereich nachzubehandeln ist oder nicht, dar. Die Verzweigungen Z stellen die Entscheidung, ob das dreidimensionale Objekt fertiggestellt ist, dar. Die Kontrollpunkte "Start" und "Stop" stehen für den Beginn und das Ende der Ausführung des Verfahrens.

Das Nachbehandeln kann erfolgen, indem die Stellen des verfestigten Bereichs, die nachbehandelt werden sollen, erneut vom Laserstrahl 22 abgetastet werden. Das Nachbehandeln kann auch mittels eines Strahls 27 erfolgen, der sich vom Strahl 22, der zum Verfestigen des Bereichs eingesetzt wird, unterscheidet, wie es im Ausführungsbeispiel der Fig. 2 gezeigt ist. Etwa können der Strahl 27 zum Nachbehandeln und der Strahl 22 zum Verfestigen aus verschiedenen Bestandteilen bestehen, wobei als Bestandteile insbesondere Photonen und Elektronen in Betracht kommen. Ferner können Wellenlänge und/oder Intensität und/oder Leistungsdichte und/oder andere Charakteristika der Strahlen verschieden sein.

Das Nachbehandeln kann dabei nur für die zuletzt selektiv verfestigte Schicht erfolgen. Das Nachbehandeln kann auch für die zuletzt selektiv verfestigte Schicht und die darunter liegende Schicht oder für die zuletzt selektiv verfestigte Schicht und mehrere darunter liegende Schichten gemeinsam erfolgen.

Durch das Nachbehandeln kann beispielsweise in dem Teilbereich, der nachbehandelt wird, die elektrische Leitfähigkeit verändert werden.

In einem weiteren Ausführungsbeispiel der Erfindung wird in einem Bereich, der nach der Verfestigung elektrisch isolierend ist, durch Nachbehandeln in einem Teilbereich ein elektrischer Leiter erzeugt. Es wird dabei ein pulverförmiges Aufbaumaterial 15 verwendet, welches eine Komponente aus einem elektrischen Isolator ("elektrische Isolatorkomponente") und eine Komponente aus einem elektrischen Leiter ("elektrische Leiterkomponente") enthält. Dabei ist es bevorzugt, dass das Aufbaumaterial 15 aus metallischen Partikeln, die von einem elektrischen Isolator, beispielsweise einem Polymer, umgeben sind, besteht. Sehr bevorzugt sind die metallischen Partikel vollständig von einer Polymerschicht umgeben, sodass das pulverförmige Aufbaumaterial 15 Pulverkörner enthält, die aus einem Kern aus einem metallischen Material und einer Hülle aus einem elektrisch isolierenden Kunststoff bestehen.

Zum selektiven Verfestigen dieses Pulvers wird eine aufgebrachte Schicht mit dem Laserstrahl 22 so abgetastet, dass die Hülle der Pulverkörner an- oder aufschmilzt und unter Bildung eines Materialverbundes erstarrt, ohne dass dabei der metallische Kern von Pulverkörnern aufschmilzt. In dem verfestigten Bereich liegt nun ein elektrisch isolierender Materialverbund vor, in den im Wesentlichen voneinander separierte Metallpartikel eingebettet sind, sodass der verfestigte Bereich insgesamt elektrisch isolierend ist. Zum Nachbehandeln einer Schicht wird der nachzubehandelnde Teilbereich erneut mit dem Laserstrahl 22 oder mit einer anderen Strahlung, bevorzugt mit einem Laserstrahl 27, der eine höhere Leistungsdichte bzw. Wellenlänge als der Laserstrahl 22 aufweist, bestrahlt. Zum Beispiel kann der (erste) Laserstrahl 22 aus einem CO₂-Laser bei im Wesentlichen 10,6 µm Wellenlänge dazu verwendet werden, die Hülle der Pulverkörner an- bzw. aufzuschmelzen und danach mit dem (zweiten) Laserstrahl 27 aus einem Ytterbium-Laser bei im Wesentlichen 1,03 µm Wellenlänge nachbehandelt werden. Durch das Bestrahlen werden der beim Verfestigen gebildete Materialverbund und die darin eingebetteten Metallpartikel an- oder aufgeschmolzen, sowie die Isolatorkomponente vorzugsweise entfernt, besonders bevorzugt im Wesentlichen rückstandsfrei entfernt. Bei Erstarrung der angeschmolzenen Metallpartikel bzw. der durch das Aufschmelzen der Metallpartikel entstandenen Metallschmelze bildet sich im Teilbereich ein elektrisch leitfähiger Materialverbund.

Es ist möglich, auf die beschriebene Art und Weise ein dreidimensionales Objekt 2 herzustellen, welches nur an den vorausbestimmten Stellen, die den nachbehandelten Teilbereichen entsprechen, elektrisch leitfähig ist. Die Anordnung dieser Stellen im Inneren und an der Oberfläche des Objekts 2 ist dabei beliebig, sodass beliebige Topologien von elektrischen Leitern, die in ein ansonsten elektrisch isolierendes dreidimensionales Objekt eingebettet sind, zugänglich sind. Bei einem dreidimensionalen Objekt 2 kann es sich zum Beispiel um das Gehäuse eines elektrisch betriebenen Geräts oder den Träger einer elektrischen Schaltung handeln, wobei durch das Gehäuse bzw. den Träger hindurch elektrische Kontaktierungen geführt sind. Bei dem dreidimensionalen Objekt 2 kann es sich auch um ebene oder mehrdimensionale Leiterplatten handeln. Auch möglich ist es etwa, ein dreidimensionales Objekt 2 mit eingebetteter, insbesondere von außen nicht sichtbarer, Antenne und/oder Kontakten für einen Mikrochip herzustellen, wodurch beispielsweise ein dreidimensionales Objekt 2 mit einem RFID oder anderen Codierungen hergestellt werden kann.

In einem weiteren Ausführungsbeispiel der Erfindung wird zum Nachbehandeln im Teilbereich zuvor verfestigtes Material abgetragen, beispielsweise durch Bestrahlen des Teilbereichs mit dem Strahl 22 zum Verfestigen oder mit einem anderen Strahl 27, um in der verfestigten Schicht Löcher zu erzeugen.

Dabei ist es bevorzugt, als Aufbaumaterial 15 ein Pulver zu verwenden, welches Pulverkörner verschiedener Körnungen (Korngrößen) enthält. Beispielsweise kann das Aufbaumaterial aus zwei Pulverkomponenten bestehen, deren Pulverkörner sich hinsichtlich der Korngröße signifikant voneinander unterscheiden, das heißt, dass die Korngrößenverteilungen der Pulverkomponenten nicht oder nur in geringem Maße überlappen.

Durch Ablation werden in einer verfestigten Schicht oder in mehreren verfestigten Schichten Löcher erzeugt, wobei die Löcher so ausreichend groß bemessen sind, dass zumindest ein Teil der Pulverkörner der zweiten Pulverkomponente in die Löcher eindringt, und wobei die Löcher so ausreichend klein bemessen sind, dass die Körner der ersten Pulverkomponente im Wesentlichen nicht in sie eindringen können. Beim Aufbringen der nächsten Schicht des Aufbaumaterials 15 dringt im Wesentlichen ausschließlich Pulver der zweiten Pulverkomponente in die Löcher ein. Die beiden Pulverkomponenten unterscheiden sich hinsichtlich einer Materialeigenschaft voneinander, beispielsweise kann die erste Pulverkomponente aus einem elektrischen Isolator und die zweite Pulverkomponente aus metallischen Partikeln bestehen, sodass beim selektiven Verfestigen einer aufgebrachten Schicht des Aufbaumaterials 15 in dem verfestigten Bereich ein elektrisch isolierender Materialverbund hergestellt wird. Die in die durch das Nachbehandeln in dem verfestigten Bereich erzeugten Löcher eindringenden metallischen Partikel bilden in den Löchern einen metallischen Leiter.

Es ist auch möglich, durch Ablation Rillen zu erzeugen, in die bei nachfolgendem Aufbringen einer Schicht des Aufbaumaterials 15 im Wesentlichen ausschließlich Pulver der zweiten Pulverkomponente eindringen kann. Dadurch können lange schmale Zonen erzeugt werden, die eine andere Materialeigenschaft aufweisen als ihre Umgebung. Wenn die zweite Pulverkomponente etwa aus metallischen Partikeln besteht, können auf diese Weise elektrisch leitfähige Leiterbahnen erzeugt werden. Wenn die zweite Pulverkomponente etwa aus Partikeln besteht, die aus Glas oder einem anderen transparenten Material bestehen, können auf diese Weise Lichtleiter erzeugt werden.

In einem weiteren Ausführungsbeispiel der Erfindung wird durch das Nachbehandeln in dem nachzubehandelnden Teilbereich eine optische Materialeigenschaft geändert, beispielsweise die Farbe, das Absorptionsvermögen oder die optische Durchlässigkeit (Transmission). Dies lässt sich beispielsweise dadurch erreichen, dass durch Bestrahlen des Teilbereichs mit dem Strahl 22 zum Verfestigen oder mit einem anderen Strahl 27 im Teilbereich ein opaker durch Sintern hergestellter Materialverbund aufgeschmolzen und unter Bildung eines transparenten Materialverbunds erstarren gelassen wird. Dies lässt sich beispielsweise auch durch das Aufbringen eines vom Aufbaumaterial 15 verschiedenen Stoffs, der sich in die verfestigte Schicht einlagert und diese dadurch beispielsweise einfärbt oder mit dieser eine chemische Reaktion eingeht, auf den Teilbereich erreichen.

In einem weiteren Ausführungsbeispiel wird ein vom Aufbaumaterial verschiedener Stoff aufgetragen, welcher im Teilbereich zuvor verfestigtes Material ätzt.

Es sind im Rahmen der Erfindung Ausführungsbeispiele möglich, bei denen alternativ oder zusätzlich zur Einwirkung einer Strahlung auf den nachzubehandelnden Teilbereich zumindest der nachzubehandelnde Teilbereich der Wirkung eines Felds ausgesetzt wird. Bei dem Feld kann es sich um ein magnetisches und/oder elektrisches und/oder elektromagnetisches Feld handeln. Das Feld kann homogen oder inhomogen sein. Das Feld kann konstant oder zeitlich veränderlich sein. Nach den Feldlinien dieses Felds können sich beispielsweise magnetische und/oder elektrisch leitfähige Partikel bzw. Fasern, die in die verfestigte Schicht eingebettet sind, ausrichten. Auf diese Weise lassen sich beispielsweise Sinterbauteile aus Verbundwerkstoffen mit einer durch die Ausrichtung von Fasern erhöhten Festigkeit sowie magnetisierte Sinterbauteile herstellen.

Das Nachbehandeln zum Verändern einer elektrischen und/oder optischen und/oder magnetischen und/oder mechanischen Materialeigenschaft und/oder der räumlichen Ausrichtung von Partikeln erfolgt in einem Teilbereich des verfestigten Bereichs, der lediglich ein vorausbestimmter Teil des verfestigten Bereichs ist, das heißt, es wird nicht der gesamte verfestigte Bereich nachbehandelt, sondern lediglich ein Teil davon, wobei Größe, Form und Position des Teils im Vorhinein festgelegt sind. Bevorzugt liegt der Teilbereich dabei im Inneren des verfestigten Bereichs. Es ist im Rahmen der Erfindung auch möglich, das Nachbehandeln in einem Teilbereich durchzuführen, der am Rand des verfestigten Bereichs liegt, um ein dreidimensionales Objekt 2 herzustellen, das an der Oberfläche Zonen aufweist, in denen die durch das Nachbehandeln erzielte Eigenschaft vorliegt. Beispielsweise kann so ein ansonsten elektrisch isolierendes dreidimensionales Objekt 2 erzeugt werden, das an seiner Oberfläche eine elektrisch leitfähige Leiterbahn aufweist.

Das Nachbehandeln kann auch durchgeführt werden, um in einem Teilbereich, der lediglich ein vorausbestimmter Teil des verfestigten Bereichs ist, eine mechanische Materialeigenschaft, insbesondere die Materialhärte, zu verändern. Bevorzugt wird dadurch ein dreidimensionales Objekt 2 hergestellt, welches in seinem Inneren Zonen erhöhter Härte und/oder Festigkeit aufweist, was dem dreidimensionalen Objekt 2 insgesamt eine erhöhte Stabilität verleiht.

Die einzelnen Merkmale der vorstehend beschriebenen Ausführungsbeispiele können, soweit möglich, beliebig miteinander kombiniert werden. So kann beispielsweise das Nachbehandeln eines Teilbereichs des verfestigten Bereichs sowohl durch Abtasten des Teilbereichs mit dem Strahl 22 zum Verfestigen oder mit einem anderen Strahl 27 als auch durch Einwirkung eines vom Aufbaumaterial verschiedenen Stoffs erfolgen.

Auch wenn die vorliegende Erfindung anhand einer Lasersinteroder Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objekts durch schichtweises Aufbringen und selektives Verfestigen eines Aufbaumaterials angewendet werden. Das Aufbaumaterial kann dabei pulverförmig sein, wie es beispielsweise beim Lasersintern oder Laserschmelzen der Fall ist.

Die Bestrahlungseinrichtung kann zum Verfestigen und Nachbehandeln beispielsweise einen oder mehrere Gas- oder Festkörperlaser oder Laser jeder anderen Art, wie zum Beispiel Laserdioden, insbesondere Zeilenbelichter mit VCSEL (Vertical Cavity Surface Emitting Laser) oder VECSEL (Vertical External Cavity Surface Emitting Laser), umfassen. Allgemein kann als Bestrahlungseinrichtung jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den dem Objektquerschnitt entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Als Aufbaumaterial können unter anderem verschiedene Arten von Pulver verwendet werden, insbesondere Metallpulver, Kunststoffpulver, Keramikpulver, Sand, gefüllte oder gemischte Pulver.

## Patentansprüche

1. Verfahren zum Herstellen eines dreidimensionalen Objekts (2) durch schichtweises Aufbringen und selektives Verfestigen von pulverförmigem Aufbaumaterial (15)
mit dem Schritt des Aufbringens einer Schicht des Aufbaumaterials (15) innerhalb eines Baufelds (8) und
mit dem Schritt des selektiven Verfestigens der aufgebrachten Schicht durch Verfestigen eines Bereichs der aufgebrachten Schicht, der dem Querschnitt des Objekts (2) in der Schicht entspricht, durch Einbringen von Energie zum Erzeugen eines verfestigten Bereichs in der Schicht,
wobei die Schritte des Aufbringens und des selektiven Verfestigens wiederholt werden, bis das dreidimensionale Objekt (2) fertiggestellt ist,
wobei wenigstens einmal während des Herstellens des dreidimensionalen Objekts (2) ein Teilbereich, der lediglich ein vorausbestimmter Teil des verfestigten Bereichs ist, nachbehandelt wird,
wobei beim Nachbehandeln erneut Energie eingebracht wird, so dass das Pulver besser aufschmilzt,
wobei durch das Nachbehandeln in dem Teilbereich eine Materialeigenschaft geändert wird,
wobei die Materialeigenschaft eine elektrische Materialeigenschaft ist, und/oder
wobei die Materialeigenschaft eine optische Materialeigenschaft ist, und/oder
wobei die Materialeigenschaft eine magnetische Materialeigenschaft ist, und/oder
wobei die Materialeigenschaft eine mechanische Materialeigenschaft ist, und/oder
wobei die Materialeigenschaft eine räumliche Ausrichtung von Partikeln ist.

2. Verfahren nach Anspruch 1,
wobei es sich bei der elektrischen Materialeigenschaft um die elektrische Leitfähigkeit handelt, und/oder
wobei es sich bei der optischen Materialeigenschaft um die Farbe handelt, und/oder
wobei es sich bei der optischen Materialeigenschaft um das Absorptionsvermögen handelt, und/oder
wobei es sich bei der optischen Materialeigenschaft um die optische Durchlässigkeit handelt, und/oder
wobei es sich bei der mechanischen Materialeigenschaft um die Materialhärte handelt.

3. Verfahren nach Anspruch 1 oder Anspruch 2,
wobei der Teilbereich im Wesentlichen im Inneren des verfestigten Bereichs liegt.

4. Verfahren nach einem der Ansprüche 1 bis 3,
wobei zum Verfestigen des Bereichs ein erster Befehlsdatensatz ausgeführt wird,
wobei zum Nachbehandeln des Teilbereichs ein zweiter Befehlsdatensatz ausgeführt wird und
wobei dem zweiten Befehlsdatensatz Koordinatenangaben zugrunde liegen, die auch dem ersten Befehlsdatensatz zugrunde liegen.

5. Verfahren nach einem der Ansprüche 1 bis 4,
wobei durch das Nachbehandeln in dem Teilbereich verfestigtes Material abgetragen wird.

6. Verfahren nach Anspruch 5,
bei dem ein pulverförmiges Aufbaumaterial (15) verwendet wird, das eine erste Pulverkomponente und eine zweite Pulverkomponente umfasst, welche beiden Pulverkomponenten sich in ihren Materialeigenschaften unterscheiden,
wobei die zweite Pulverkomponente im Wesentlichen signifikant feinkörnigere Pulverkörner umfasst als die erste Pulverkomponente, mit den Schritten:
Abtragen des verfestigten Materials in dem Teilbereich dergestalt, dass im Teilbereich Löcher und/oder Rillen generiert werden, die schmäler als eine Körnung der ersten Pulverkomponente sind,
Aufbringen einer weiteren Schicht des Aufbaumaterials (15) mindestens im Teilbereich, sodass im Wesentlichen ausschließlich die zweite Pulverkomponente in die Löcher und/oder Rillen eindringen kann.

7. Verfahren nach den Ansprüchen 1 bis 6,
wobei zum Nachbehandeln des Teilbereichs eine Strahlung eingesetzt wird, die sich von einer zum Verfestigen des Bereichs eingesetzten Strahlung unterscheidet, insbesondere hinsichtlich ihrer Bestandteile und/oder ihrer Wellenlänge und/oder ihrer Intensität und/oder ihrer Leistungsdichte.

8. Verfahren nach einem der Ansprüche 1 bis 7,
wobei durch das Nachbehandeln in dem Teilbereich ein elektrischer Leiter, insbesondere ein metallischer Leiter, erzeugt wird.

9. Verfahren nach Anspruch 8,
wobei als Aufbaumaterial (15) ein Material mit zumindest einer elektrischen Leiterkomponente und zumindest einer elektrischen Isolatorkomponente verwendet wird,
wobei die elektrische Isolatorkomponente mindestens in dem Teilbereich mindestens partiell von der elektrischen Leiterkomponente separiert wird und
wobei beim Nachbehandeln die elektrische Leiterkomponente in dem Teilbereich unter Bildung des elektrischen Leiters verbunden, insbesondere an- und/oder aufgeschmolzen, wird.

10. Verfahren nach einem der Ansprüche 1 bis 9,
wobei als Aufbaumaterial (15) ein Pulver verwendet wird, das aus einem elektrischen Leiter bestehende Partikel enthält, die von einem elektrischen Isolator ummantelt sind.

11. Verfahren nach einem der Ansprüche 1 bis 10,
wobei der Teilbereich zumindest während des Nachbehandelns der Einwirkung eines magnetischen und/oder elektrischen und/oder elektromagnetischen Felds ausgesetzt wird.

12. Verfahren nach einem der Ansprüche 1 bis 11,
wobei zum Nachbehandeln mindestens in dem Teilbereich ein vom Aufbaumaterial (15) verschiedener Stoff aufgebracht und bevorzugt nach dem Aufbringen aktiviert wird.

13. Steuereinrichtung (29) für eine Vorrichtung (1) zum Herstellen eines dreidimensionalen Objekts (2) durch schichtweises Aufbringen und selektives Verfestigen von pulverförmigem Aufbaumaterial (15),
wobei die Steuereinrichtung (29) ausgebildet ist, die Vorrichtung (1) so zu steuern, dass sie
eine Schicht des Aufbaumaterials (15) innerhalb eines Baufelds (8) aufbringt,
die aufgebrachte Schicht durch Verfestigen eines Bereichs der aufgebrachten Schicht, der dem Querschnitt des Objekts (2) in der Schicht entspricht, mittels Einbringen von Energie zum Erzeugen eines verfestigten Bereichs in der Schicht selektiv verfestigt,
das Aufbringen und das selektive Verfestigen wiederholt, bis das dreidimensionale Objekt (2) fertiggestellt ist, und
wenigstens einmal während des Herstellens eines dreidimensionalen Objekts (2) einen Teilbereich, der lediglich ein vorausbestimmter Teil des verfestigten Bereichs ist, nachbehandelt,
wobei beim Nachbehandeln erneut Energie eingebracht wird, so dass das Pulver besser aufschmilzt,
wobei durch das Nachbehandeln in dem Teilbereich eine Materialeigenschaft geändert wird,
wobei die Materialeigenschaft eine elektrische Materialeigenschaft ist, und/oder
wobei die Materialeigenschaft eine optische Materialeigenschaft ist, und/oder
wobei die Materialeigenschaft eine magnetische Materialeigenschaft ist, und/oder
wobei die Materialeigenschaft eine mechanische Materialeigenschaft ist, und/oder
wobei die Materialeigenschaft eine räumliche Ausrichtung von Partikeln ist.

14. Vorrichtung (1) zum Herstellen eines dreidimensionalen Objekts (2) durch schichtweises Aufbringen und selektives Verfestigen von pulverförmigem Aufbaumaterial (15) umfassend eine Steuereinrichtung (29) gemäß Anspruch 13,
wobei die Vorrichtung (1) so ausgebildet ist, mittels der Steuereinrichtung (29) so gesteuert zu werden, dass sie
eine Schicht des Aufbaumaterials (15) innerhalb eines Baufelds (8) aufbringt,
die aufgebrachte Schicht durch Verfestigen eines Bereichs der aufgebrachten Schicht, der dem Querschnitt des Objekts (2) in der Schicht entspricht, mittels Einbringen von Energie zum Erzeugen eines verfestigten Bereichs in der Schicht selektiv verfestigt,
das Aufbringen und das selektive Verfestigen wiederholt, bis das dreidimensionale Objekt (2) fertiggestellt ist, und
wenigstens einmal während des Herstellens eines dreidimensionalen Objekts (2) einen Teilbereich, der lediglich ein vorausbestimmter Teil des verfestigten Bereichs ist, nachbehandelt,
wobei beim Nachbehandeln erneut Energie eingebracht wird, so dass das Pulver besser aufschmilzt,
wobei durch das Nachbehandeln in dem Teilbereich eine Materialeigenschaft geändert wird,
wobei die Materialeigenschaft eine elektrische Materialeigenschaft ist, und/oder
wobei die Materialeigenschaft eine optische Materialeigenschaft ist, und/oder
wobei die Materialeigenschaft eine magnetische Materialeigenschaft ist, und/oder
wobei die Materialeigenschaft eine mechanische Materialeigenschaft ist, und/oder
wobei die Materialeigenschaft eine räumliche Ausrichtung von Partikeln ist.

15. Computerprogramm, das in eine programmierbare Steuereinrichtung ladbar ist, mit einem Programmcode, um alle Schritte eines Verfahrens nach einem der Ansprüche 1 bis 12 auszuführen, wenn das Computerprogramm auf einer Steuereinrichtung (29) gemäß Anspruch 13 ausgeführt wird.

## Claims

1. A method for manufacturing a three-dimensional object (2) by layer-wise application and selective solidification of a building material (15) in powder form
with the step of applying a layer of the building material (15) within a build area (8) and
with the step of selectively solidifying the applied layer by solidifying an area of the applied layer which corresponds to the cross-section of the object (2) in the layer, by introducing energy, in order to produce a solidified area in the layer,
wherein the steps of applying and selectively solidifying are repeated until the three-dimensional object (2) is completed,
wherein at least once during manufacturing the three-dimensional object (2), a sub-area that is only a predetermined portion of the solidified area is after-treated,
wherein energy is introduced again during the after-treatment, so that the powder melts better,
wherein a material property is modified in the sub-area by the after-treatment,
wherein the material property is an electric material property, and/or
wherein the material property is an optical material property, and/or
wherein the material property is a magnetic material property, and/or
wherein the material property is a mechanical material property, and/or
wherein the material property is a spatial orientation of particles.

2. The method according to claim 1,
wherein the electric material property is the electric conductivity, and/or
wherein the optical material property is the color, and/or
wherein the optical material property is the absorption capacity, and/or
wherein the optical material property is the optical transparency, and/or
wherein the mechanical material property is the material hardness.

3. The method according to claim 1 or 2,
wherein the sub-area is located substantially inside the solidified area.

4. The method according to any one of claims 1 to 3,
wherein a first command data set is executed for solidifying the area,
wherein a second command data set is executed for after-treating the sub-area, and
wherein coordinate data underlie the second command data set which also underlie the first command data set.

5. The method according to any of claims 1 to 4,
wherein solidified material is removed in the sub-area by the after-treatment.

6. The method according to claim 5,
wherein a building material (15) in powder form is used which comprises a first powder component and a second powder component, wherein the two powder components are different from each other with respect to their material properties,
wherein the second powder component comprises powder grains which are substantially granulated in a significantly finer way compared to the first powder component,
with the steps:
removing the solidified material in the sub-area such that in the sub-area holes and/or grooves are generated that are narrower than a grain size of the first powder component,
applying a further layer of the building material (15) at least in the sub-area such that substantially exclusively the second powder component can get into the holes and/or grooves.

7. The method according to any of claims 1 to 6,
wherein a radiation is used for the after-treatment of the sub-area, which radiation differs from a radiation used for solidifying the area, in particular with respect to its constituents and/or its wavelength and/or its intensity and/or its power density.

8. The method according to any of claims 1 to 7,
wherein an electric conductor, in particular a metallic conductor, is generated by the after-treatment in the sub-area.

9. The method according to claim 8,
wherein a material with at least one electric conductor component and at least one electric insulator component is used as building material (15),
wherein the electric insulator component is at least partially separated from the electric conductor component in at least the sub-area, and
wherein in the course of the after-treatment, the electric conductor component is joined, in particular partially and/or completely melted in the sub-area, forming an electric conductor.

10. The method according to any of claims 1 to 9,
wherein a powder that contains particles consisting of an electric conductor which are coated with an electric insulator is used as building material (15).

11. The method according to any of claims 1 to 10,
wherein the sub-area is, at least during the after-treatment, exposed to the influence of a magnetic and/or electric and/or electromagnetic field.

12. The method according to any of claims 1 to 11,
wherein for the after-treatment, a substance being different from the building material (15) is applied in at least the sub-area and preferably activated after the application.

13. A control device (29) for an apparatus (1) for manufacturing a three-dimensional object (2) by layer-wise application and selective solidification of building material (15) in powder form,
wherein the control device (29) is configured to control the apparatus (1) such that
it applies a layer of building material (15) within a build area (8),
selectively solidifies the applied layer by solidifying an area of the applied layer corresponding to the cross-section of the object (2) in the layer, by introducing energy, in order to generate a solidified area in the layer,
repeats the application and selective solidification until the three-dimensional object (2) is completed, and
after-treats a sub-area that is only a predetermined portion of the solidified area at least once during the manufacture of the three-dimensional object (2),
wherein energy is introduced again during the after-treatment, so that the powder melts better,
wherein a material property is modified in the sub-area by the after-treatment,
wherein the material property is an electric material property, and/or
wherein the material property is an optical material property, and/or
wherein the material property is a magnetic material property, and/or
wherein the material property is a mechanical material property, and/or
wherein the material property is a spatial orientation of particles.

14. An apparatus (1) for manufacturing a three-dimensional object (2) by layer-wise application and selective solidification of a building material (15) in powder form, comprising a control device according to claim 13,
wherein the apparatus (1) is configured to be controlled, by the control device, such that
it applies a layer of building material (15) within a build area (8),
selectively solidifies the applied layer by solidifying an area of the applied layer corresponding to the cross-section of the object (2) in the layer, by introducing energy, in order to generate a solidified area in the layer,
repeats the application and selective solidification until the three-dimensional object (2) is completed, and
after-treats a sub-area that is only a predetermined portion of the solidified area at least once during the manufacture of a three-dimensional object (2),
wherein energy is introduced again during the after-treatment, so that the powder melts better,
wherein a material property is modified in the sub-area by the after-treatment,
wherein the material property is an electric material property, and/or
wherein the material property is an optical material property, and/or
wherein the material property is a magnetic material property, and/or
wherein the material property is a mechanical material property, and/or
wherein the material property is a spatial orientation of particles.

15. Computer program which is loadable into a programmable control device and which comprises a program code in order to carry out all steps of a method according to any of claims 1 to 12 when the computer program is executed on a control device (29) according to claim 13.

## Revendications

1. Procédé de fabrication d'un objet tridimensionnel (2) par l'application en couches et la solidification sélective d'un matériau de construction (15),
comprenant l'étape d'application d'une couche du matériau de construction (15) à l'intérieur d'un champ de construction (8) et
comprenant l'étape de solidification sélective de la couche appliquée par solidification d'une zone de la couche appliquée, qui correspond à la section transversale de l'objet (2) dans la couche, par l'introduction d'énergie pour générer une zone solidifiée dans la couche,
dans lequel les étapes d'application et de solidification sélective sont répétées jusqu'à ce que l'objet tridimensionnel (2) soit fini,
dans lequel au moins une fois pendant la fabrication de l'objet tridimensionnel (2), une zone partielle, qui est uniquement une partie prédéterminée de la zone solidifiée, est soumise à un traitement ultérieur,
dans lequel lors du traitement ultérieur, de l'énergie est à nouveau introduite, de sorte que la poudre soit mieux solidifiée,
dans lequel par le traitement ultérieur dans la zone partielle, une propriété de matériau est modifiée,
dans lequel la propriété de matériau est une propriété de matériau électrique, et/ou
dans lequel la propriété de matériau est une propriété de matériau optique, et/ou
dans lequel la propriété de matériau est une propriété de matériau magnétique, et/ou
dans lequel la propriété de matériau est une propriété de matériau mécanique, et/ou
dans lequel la propriété de matériau est une orientation spatiale de particules**.**

2. Procédé selon la revendication 1,
dans lequel il s'agit, pour la propriété de matériau électrique, de la conductivité électrique, et/ou
dans lequel il s'agit pour la propriété de matériau optique de la couleur, et/ou
dans lequel il s'agit, pour la propriété de matériau optique, du pouvoir d'absorption, et/ou
dans lequel il s'agit, pour la propriété de matériau optique, de la transmissivité optique, et/ou
dans lequel il s'agit, pour la propriété de matériau mécanique, de la rigidité du matériau.

3. Procédé selon la revendication 1 ou la revendication 2,
dans lequel la zone partielle se situe essentiellement à l'intérieur de la zone solidifiée.

4. Procédé selon l'une des revendications 1 à 3,
dans lequel un premier jeu de données de commande est exécuté pour la solidification de la zone,
dans lequel un deuxième jeu de données de commande est exécuté pour le traitement ultérieur de la zone partielle, et
dans lequel le deuxième jeu de données de commande se base sur des données de coordonnées qui se basent également sur le premier jeu de données de commande.

5. Procédé selon l'une des revendications 1 à 4,
dans lequel du matériau solidifié dans la zone partielle est enlevé par le traitement ultérieur.

6. Procédé selon la revendication 5,
dans lequel un matériau de construction pulvérulent (15) est utilisé, lequel comprend une première composante de poudre et une deuxième composante de poudre, lesquelles deux composantes de poudre se distinguent par leurs propriétés de matériau,
dans lequel la deuxième composante de poudre comprend essentiellement des grains de poudre nettement plus fins que la première composante de poudre, comprenant les étapes :
enlèvement du matériau solidifié dans la zone partielle, de sorte que dans la zone partielle, des trous et/ou des rainures soient générés, lesquels sont plus étroits qu'une graine de la première composante de poudre,
application d'une autre couche du matériau de construction (15) au moins dans la zone partielle, de sorte qu'essentiellement exclusivement la deuxième composante de poudre puisse pénétrer dans les trous et/ou les rainures.

7. Procédé selon les revendications 1 à 6,
dans lequel un rayonnement est utilisé pour le traitement ultérieur de la zone partielle, lequel rayonnement se distingue d'un rayonnement utilisé pour la solidification de la zone, en particulier en ce qui concerne sa composante et/ou sa longueur d'onde et/ou son intensité et/ou sa densité de puissance.

8. Procédé selon l'une des revendications 1 à 7,
dans lequel un conducteur électrique, en particulier un conducteur métallique, est généré par le traitement ultérieur dans la zone partielle.

9. Procédé selon la revendication 8,
dans lequel un matériau comprenant au moins une composante de conducteur électrique et au moins une composante d'isolateur électrique est utilisé en tant que matériau de construction (15),
dans lequel la composante d'isolateur électrique au moins dans la zone partielle est séparée au moins partiellement de la composante de conducteur électrique, et
dans lequel lors du traitement ultérieur, la composante de conducteur électrique dans la zone partielle est reliée, en particulier fondue partiellement et/ou fondue, sous la formation du conducteur électrique.

10. Procédé selon l'une des revendications 1 à 9,
dans lequel une poudre est utilisée en tant que matériau de construction (15), laquelle contient des particules constituées d'un conducteur électrique, lesquelles sont enrobées par un isolateur électrique.

11. Procédé selon l'une des revendications 1 à 10,
dans lequel la zone partielle est exposée au moins pendant le traitement ultérieur de l'action d'un champ magnétique et/ou électrique et/ou électromagnétique.

12. Procédé selon l'une des revendications 1 à 11,
dans lequel un matériau différent du matériau de construction (15) est appliqué dans la zone partielle pour le traitement ultérieur et est de préférence activé après l'application.

13. Dispositif de commande (29) pour un dispositif (1) de fabrication d'un objet tridimensionnel (2) par l'application en couches et la solidification sélective d'un matériau de construction (15),
dans lequel le dispositif de commande (29) est conçu pour commander le dispositif (1) de sorte qu'il
applique une couche du matériau de construction (15) à l'intérieur d'un champ de construction (8),
solidifie sélectivement la couche appliquée par solidification d'une zone de la couche appliquée, qui correspond à la section transversale de l'objet (2) dans la couche, par l'introduction d'énergie pour générer une zone solidifiée dans la couche,
répète l'application et la solidification sélective jusqu'à ce que l'objet tridimensionnel (2) soit fini, et
au moins une fois pendant la fabrication d'un objet tridimensionnel (2), une zone partielle, qui est uniquement une partie prédéterminée de la zone solidifiée, est soumise à un traitement ultérieur,
dans lequel lors du traitement ultérieur, de l'énergie est à nouveau introduite, de sorte que la poudre soit mieux solidifiée,
dans lequel par le traitement ultérieur dans la zone partielle, une propriété de matériau est modifiée,
dans lequel la propriété de matériau est une propriété de matériau électrique, et/ou
dans lequel la propriété de matériau est une propriété de matériau optique, et/ou
dans lequel la propriété de matériau est une propriété de matériau magnétique, et/ou
dans lequel la propriété de matériau est une propriété de matériau mécanique, et/ou
dans lequel la propriété de matériau est une orientation spatiale de particules.

14. Dispositif (1) de fabrication d'un objet tridimensionnel (2) par l'application en couches et la solidification sélective d'un matériau de construction (15), comprenant un dispositif de commande (29) selon la revendication 13,
dans lequel le dispositif (1) est conçu pour être commandé par le dispositif de commande (29) de sorte qu'il
applique une couche du matériau de construction (15) à l'intérieur d'un champ de construction (8),
solidifie sélectivement la couche appliquée par solidification d'une zone de la couche appliquée, qui correspond à la section transversale de l'objet (2) dans la couche, par l'introduction d'énergie pour générer une zone solidifiée dans la couche,
répète l'application et la solidification sélective jusqu'à ce que l'objet tridimensionnel (2) soit fini, et
au moins une fois pendant la fabrication d'un objet tridimensionnel (2), une zone partielle, qui est uniquement une partie prédéterminée de la zone solidifiée, est soumise à un traitement ultérieur,
dans lequel lors du traitement ultérieur, de l'énergie est à nouveau introduite, de sorte que la poudre soit mieux solidifiée,
dans lequel par le traitement ultérieur dans la zone partielle, une propriété de matériau est modifiée,
dans lequel la propriété de matériau est une propriété de matériau électrique, et/ou
dans lequel la propriété de matériau est une propriété de matériau optique, et/ou
dans lequel la propriété de matériau est une propriété de matériau magnétique, et/ou
dans lequel la propriété de matériau est une propriété de matériau mécanique, et/ou
dans lequel la propriété de matériau est une orientation spatiale de particules.

15. Programme informatique, qui peut être chargé dans un dispositif de commande programmable, comprenant un code de programme, pour exécuter toutes les étapes d'un procédé selon l'une des revendications 1 à 12, lorsque le programme informatique est exécuté sur un dispositif de commande (29) selon la revendication 13.
